# EUROPEAN PATENT APPLICATION

(11) **EP 2 009 882 A2**
(43) Date of publication of application: **31.12.2008**
(21) Application number: 08386012.2
(22) Date of filing: 25.06.2008
(51) Int. Cl.: H04M 1/656, H04M 1/725

(54) **A device method and system for communication session storage**

(30) Priority: 25.06.2007 US 767571
(71) Applicant: Emblaze Mobile Ltd., 43662 Industrial Area Ra'anana (IL)
(72) Inventor: Reifman, Eli, Ra'anana, 43662 (IL)
(74) Representative: Masoulas, Athanasios V.

(57) **Abstract**

According to some embodiments of the present invention a communication device is provided with a data storage module adapted to store data related to one or more communication sessions of the communication device. According to some embodiments of the present invention, voice, video, text and other types of communication sessions, conducted via the communication device, may be: (1) stored, (2) characterized, (3) indexed, (4) searched, and (5) retrieved.

## Description

### TECHNICAL FIELD

The present invention relates generally to the field of communication. More specifically, the present invention relates to a device, system and method for communication session storage.

### BACKGROUND

There is a need in the field of communication for improved methods of managing personal communication.

Speech recognition (in many contexts also known as automatic speech recognition, computer speech recognition or erroneously as voice recognition) is the process of converting a speech signal to a sequence of words, by means of an algorithm implemented as a computer program.

Speech recognition applications that have emerged over the last few years include voice dialing (e.g., "Call home"), call routing (e.g., "I would like to make a collect call"), simple data entry (e.g., entering a credit card number), preparation of structured documents (e.g., a radiology report), domotic appliances control and content-based spoken audio search (e.g. find a podcast where particular words were spoken).

Voice recognition or speaker recognition is a related process that attempts to identify the person speaking, as opposed to what is being said.

Speech recognition systems are well known to the art. Examples include the IBM Tangora ("A Maximum Likelihood Approach to Continuous Speech Recognition;" L. R. Bahl, F. Jelinek, R. Mercer; Readings in Speech Recognition: Ed.: A. Waibel. K. Lee; Morgan Kaufmann, 1990; pp. 308-319.) and Dragon Systems Dragon 30k dictation systems. Typically, they are single user, and speaker-dependent. This requires each speaker to train the speech recognizer with his or her voice patterns, during a process called "enrollment". The systems then maintain a profile for each speaker, who must identify themselves to the system in future recognition sessions. Typically speakers enroll via a local microphone in a low noise environment, speaking to the shingle machine on which the recognizer is resident. During the course of enrollment, the speaker will be required to read a lengthy set of transcripts, so that the system can adjust itself to the peculiarities of each particular speaker.

Discrete dictation systems, such as the two mentioned above, require speakers to form each word in a halting and unnatural manner, pausing, between, each, word. This allows the speech recognizer to identify the voice pattern associated each individual word by using preceding, and following, silences to bind the words. The speech recognizer will typically have a single application for which it is trained, operating on the single machine, such as Office Correspondence in the case of the IBM Angora System.

Multi-user environments with speaker dependent speech recognizers require each speaker to undertake tedious training of the recognizer for it to understand his or her voice patterns. While it has been suggested that the templates which store the voice patterns may be located in a common database wherein the system knows which template to use for speech recognition by the speaker telephone extension, each speaker must none-the-less train the system before use. A user new to the system calling from an outside telephone line will find this procedure to be unacceptable. Also, the successful telephonic speech recognizer will be capable of rapid context switches to allow speech related to various subject areas to be accurately recognized. For example, a system trained for general Office Correspondence will perform poorly when presented with strings of digits.

The Sphinx system, first described in the PhD Dissertation of Kai-Fu Lee ("Large Vocabulary Speaker and Dependent Continuous Speech Recognition: The Sphinx System;" Kai-Fu Lee: Carnegie Mellon University, Department of Electrical and Computer Engineering: April 1988: CMU-CS-88-148), represented a major advance over previous speaker, dependent recognition systems in that it was both speaker independent, and capable of recognizing words from a continuous stream of conversational speech. This system required nc individualized speaker enrollment prior to effective use. Some speaker dependent systems require speakers to be reenrolled every four to six weeks, and require users to carry a personalized plug-in cartridgee to be understood by the system. Also with continuous speech recognition, no pauses between words are required. thus the Sphinx system represents a much more user friendly approach to the casual user of a speech recognition system. This will be an essential feature of telephonic speech recognition systems, since the users will have no training in how to adjust their speech for the benefit of the recognizer.

A speech recognition system must also offer real time operation with a given modest vocabulary. However, the Sphinx System still had some of the disadvantages of the prior speaker dependent recognizers in that it was programmed to operate on a single machine in a low noise environment using a microphone and a relatively constrained vocabulary. It was not designed for multi-user support, at least with respect to the different locations, and multiple vocabularies for recognition.

### SUMMARY

According to some embodiments of the present invention, there is disclosed a device, method and system which may be used as a communication device facilitating an audio communication session (i.e. telephone call), a video session (i.e. video call), text communication session (i.e. sms or instant messaging), or any other type of communication session known today or to be devised in the future, between two or more participants. According to some embodiments of the present invention, a communication device (e.g. mobile communication device) is provided with a communication module (e.g. transceiver) adapted to receive andlor transmit communication from/to other communication devices of a communication session.

According to some embodiments of the present invention, the communication device is provided with a data module. The data storage module may be adapted to store data related to one or more communication sessions of the communication device. According to some embodiments of the present invention, voice, video, text and other types of communication sessions, conducted via the communication device, may be: (1) stored, (2) characterized. (3) indexed searched, and (4) retrieved. According to further embodiments of the present invention, there is provided a device, method and system may to record messages in the form of audio note, video notes and text based notes.

According to some embodiments of the present invention, the audio communication session may be a Voice Over IP session ("VOIP"), a PSTN session a streaming media session and any other method known today or to be devised in the future of audio communication.

According to some embodiments of the present invention, the communication module may be adapted to send and/or receive analog audio signals, digital audio signals, packetized data stream, streaming audio data according to the type of audio communication session the module is facilitating.

According to some embodiments of the present invention, a recording module may be adapted to record and save the one or more audio streams participating in the audio communication session.

According to some embodiments of the present invention, the recording module may also associate a meta-data ("header") portion with each participant's data stream. According to some further embodiments of the present invention, the header may comprise of details of the recorded audio stream (i.e. name, phone number, IP address, start time, end time).

According to some embodiments of the present invention, the recording module may be adapted to create an audio file of the audio communication session consisting of the participants recorded data streams.

According to some embodiments of the present invention, the recording module may associate a meta-data portion with the audio file of the audio communication session. According to some further embodiments of the present invention, the meta-data may be generated using the meta-data of each recorded audio stream and may comprise details of the audio communication session, such details may be: start time, end time, to field, from field, date, length of conversation and a conversion to text field which is discussed herein below.

According to some embodiments of the present invention, the audio file generated by the recording module may be an MP3 file, a WAV file, a FLAC file, an ACE file or any other audio file format known today or to be devised in the future.

According to some embodiments of the present invention, a storage module may be adapted to store the audio files generated by the recording module.

According to some embodiments of the present invention, a speech to text conversion module may be adapted to generate a text file from an audio file generated by the recording module.

According to some further embodiments of the present invention, the text file may comprise at least a partial transcription of the recorded audio conversation.

According to some further embodiments of the present invention, the speech to text conversion may be done using an algorithm based on (1) Hidden Markov Model (HMM) technology or (2) a Neural network based speech recognition (NN) a (3) hybrid technology (NN-HMM) a (4) Dynamic time warping (DTW) technology or any other speech to text technology known today or to be devised in the future.

According to some embodiments of the present invention, the speech to text conversion module may associate with the text file identifying parameters. According to some embodiments of the present invention, the identifying parameters may be used by the storage module when storing the text file for associating it with the audio file it was generated from.

According to some embodiments of the present invention, a text search module may be adapted to receive search terms, which search terms may be received from the device's user and/or from another source.

According to some embodiments of the present invention, the text search module may perform a search for the search terms among the text files and the audio files meta-data.

According to some embodiments of the present invention, the text search module may indicate which audio files is associated with (1) a meta-data portion comprises one or more search terms, and (2) were not converted to text, according to yet further embodiments of the present invention, the user may select audio files from this group and convert them to text as described hereinabove.

According to some embodiments of the present invention, an archive model may export the contents of the data storage module to external data storage (i.e. external hard-drive, mass storage server, docking station data storage module).

According to some embodiments of the present invention, an archive model may import content from external data storage (i.e. external hard-drive, mass storage server, docking station data storage module) to the data storage module.

### BRIEF DESCRIPTION OF THE DRAWINGS

The subject matter regarded as the invention is particularly pointed out and distinctly claimed in the concluding portion of the specification.

The invention, however, both as to organization and method of operation, together with objects, features, and advantages thereof, may best be understood by reference to the following detailed description when read with the accompanying drawings in which:

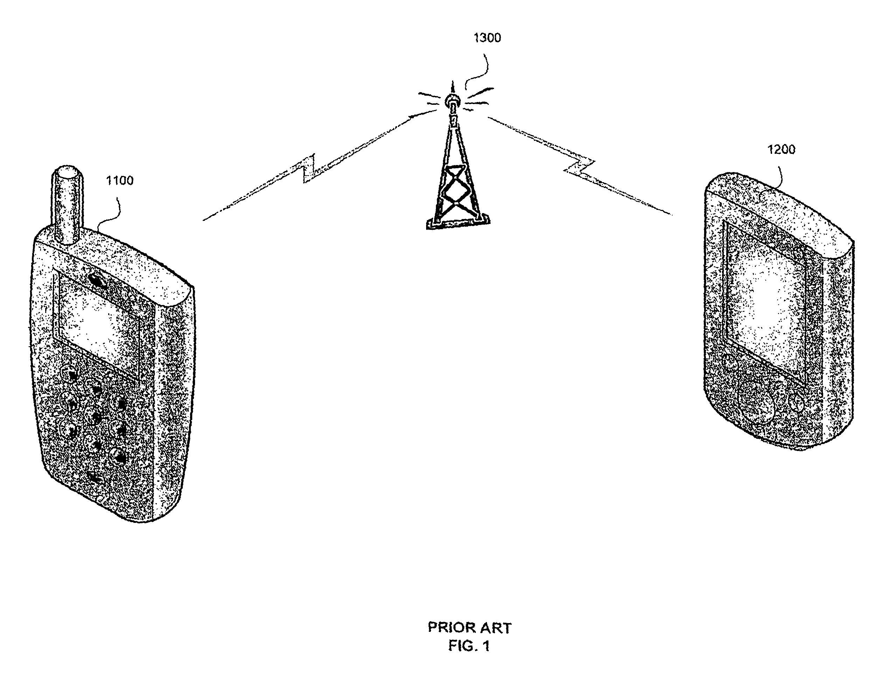

Fig. 1 shows symbolic block diagram of two mobile communication devices operating through a cellular network:
Figs. 2A & 2B show screenshots of a call log according to some embodiments of the present invention:
Fig. 3 shows an exemplary block diagram of a call logging system operating on a mobile device according to some embodiments of the present invention:
Fig. 4 shows a flowchart including the steps of an exemplary method of togging calls according to some embodiments of the present invention:
Fig. 5 shows a flowchart including the steps of an exemplary method of searching call log according to some embodiments of the present invention: and
Figs. 6A & 6B show symbolic block diagrams of embodiments of present invention including external call archiving.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not tc obscure the present invention.

Unless specifically stated othemvise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks. CD-ROMs, magnetic-optical disks, read-only memories (ROMs), random access memories (RAMS) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

The present invention is a device, method and system for personal communication management. According to some embodiments of the present invention, the disclosed system may be used as a communication device facilitating an audio communication session (i.e. conversation) between one of more participants.

According to some embodiments of the present invention, there is provided a communication module adapted to receive and/or transmit communication from /to other participants in the audio communication session.

According to some embodiments of the present invention, the audio communication session may be a Voice Over IP session ("VOIP), a PSTN session a streaming media session and any other method know today or to be devised in the future of audio communication.

According to some embodiments of the present invention, the communication module may be adapted to send and/or receive analog audio signal, digital audio signals, packetized data stream, streaming audio data according to the type of audio communication session the module is facilitating.

According to some embodiments of the present invention, a recording module may be adapted to record and save the one or more audio streams participating in the audio communication session.

According to some embodiments of the present invention, the recording module may also associate a meta-data ("header") portion with each participant's data stream. According to some further embodiments of the present invention, the header may comprise of details of the recorded audio stream (i.e. name, phone number, IP address, start time, end time).

According to some embodiments of the present invention, the recording module may be adapted to create an audio file of the audio communication session consisting of the participants recorded data streams.

According to some embodiments of the present invention, the recording module may associate a meta-data portion with the audio file of the audio communication session. According to some further embodiments of the present invention, the meta-data may be generated using the meta-data of each recorded audio stream and may comprise details of the audio communication session, such details may be: start time, end time, to field, from field, date, length of conversation and a conversion to text field which is discussed herein below

According to some embodiments of the present invention, the audio file generated by the recording module may be an MP3 file, a WAV file, a FLAG file, an ACE file or any other audio file format known today or to be devised in the future.

According to some embodiments of the present invention, a storage module may be adapted to store the audio files generated by the recording module.

According to some embodiments of the present invention, a speech to text conversion module may be adapted to generate a text file from an audio file generated by the recording module.

According to some further embodiments of the present invention, the text file may comprise a transcript of the recorded audio conversation.

According to some further embodiments of the present invention, the speech to text conversion may be done using an algorithm based on (1) Hidden Markov Model (HMM) technology or (2) a Neural network based speech recognition (NN) a (3) hybrid technology (NN-HMM) a (4) Dynamic time warping (DM) technology or any other technology known today or to be devised in the future.

According to Some embodiments of the present invention, the speech to text conversion module may associate with the text file identifying parameters. According to some embodiments of the present invention, the identifying parameters may be used by the storage module when storing the text file for associating it with the audio file it was generated from.

According to some embodiments of the present invention, a text search module may be adapted to receive search terms, which search terms may be received from the device's user and/or from another source.

According to some embodiments of the present invention, the text search module may perform a search for the search terms among the text files and the audio files meta-data.

According to some embodiments of the present invention, the text search module may show which audio files has (1) a meta-data portion comprises one or more search terms and (2) were not converted to text, according to yet further embodiments of the present invention, the user may select audio files from this group and convert them to text as described hereinabove.

According to some embodiments of the present invention, an archive model may export the contents of the data storage module to external data storage (i.e. external hard-drive, mass storage server, docking station data storage module).

According to some embodiments of the present invention, an archive model may import content from external data storage (i.e. external hard-drive, mass storage server, docking station data storage module) to the data storage module.

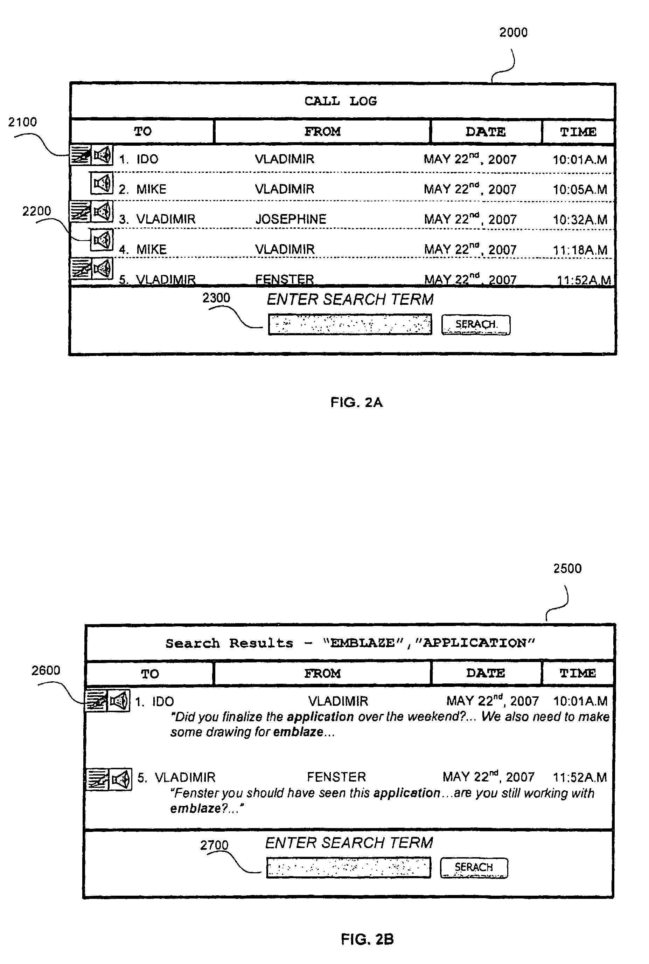

Turning now to Fig. 2A and Fig. 2B, there is shown an exemplary screen capture of the device in accordance with some embodiments of the present invention.

According to some embodiments of the present invention, the device may display a call log (2000) of the device. According to some further embodiments of the present invention, the call log may show which calls ("audio session communication") were made from the device, who initiated the call, who received the call and when was the call made.

According to some embodiments of the present invention, the call log may show whether an audio file of a conversation is stored in the system (2200) and/or whether a text transcription file of a conversation is stored in the system (2100).

According to some embodiments of the present invention, the device may be adapted to receive from the user one or more search terms (2300).

According to some embodiments of the present invention, the device may be adapted to display search results (2500).

According to some further embodiments of the present invention, the device may show which of the stored audio communication sessions comprises one or more of the inputted search terms.

According to some embodiments of the present invention, the search results may be displayed in a similar manner to those described in Fig. 2A with the exception of showing the locations where the search terms were located.

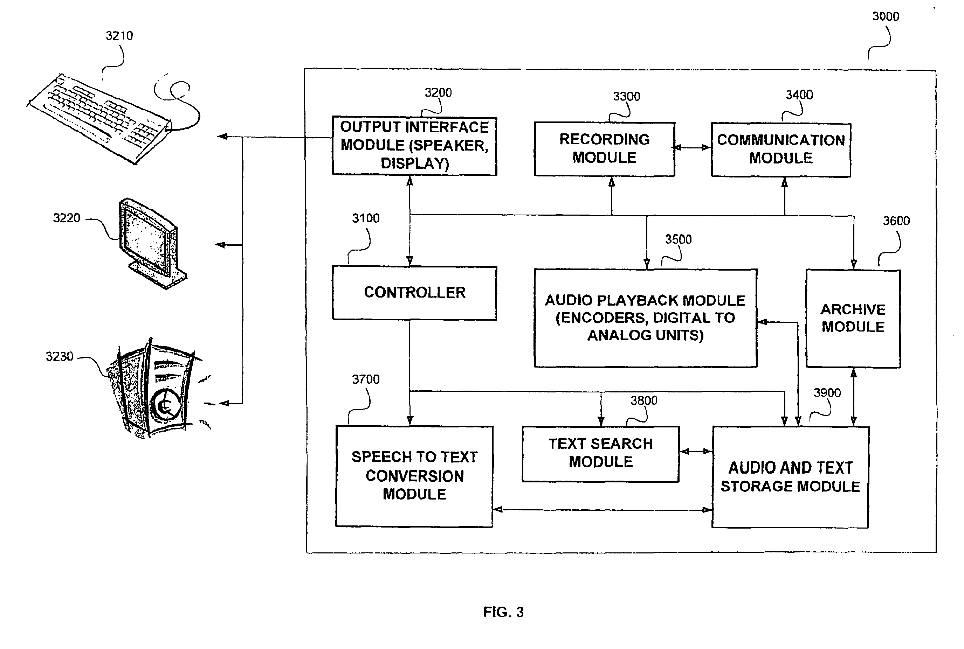

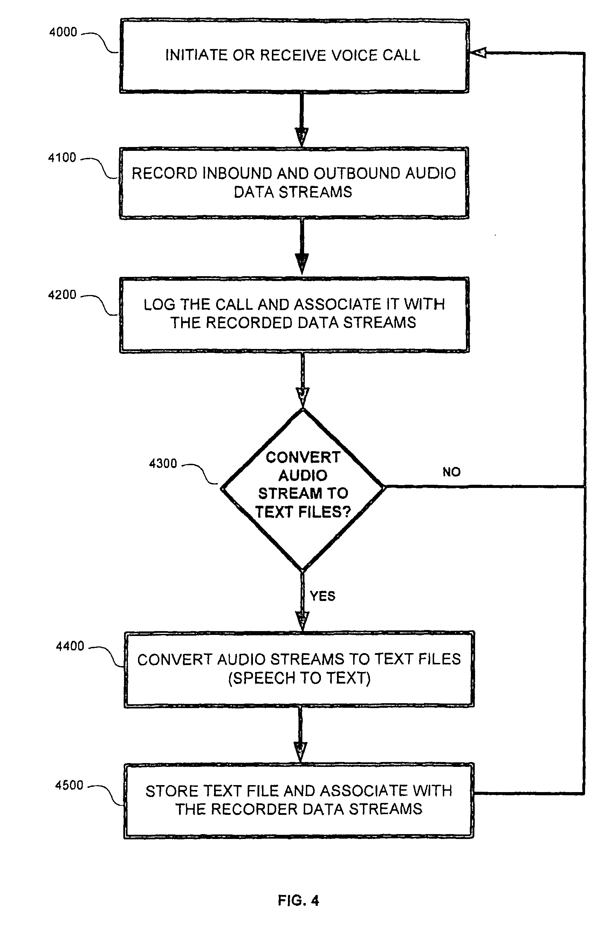

Turning now to Fig. 3, there is shown a detailed embodiment of a communication unit (3000) in accordance with some embodiments of the present invention. The functionality of unit 3000 may be best described in conjunction with Fig. 4. there is depicted a flow chart showing the steps of an exemplary embodiment in accordance with the present invention.

According to some embodiments of the present invention, a communication unit 3000 may comprise of :(1) a a controller, (2) an output interface module, (3) a recording module, (4) a communication module, (5) an audio playback module. (6) an archive module, (7) a speech to text conversion module,(8) a text search module, (9) an audio and text storage module, and output elements (i.e. display, speaker, keyboard) interfacing via the interface module.

According to some embodiments of the present invention, communication module 3400 may initiate or receive audio communication sessions (voice conversations) with other communication units (step 4000).

According to some embodiments of the present invention, the communication module 3400 may receive and/or transmit communication data from /to other participants in the audio communication session.

According to some embodiments of the present invention, the audio communication session may be a Voice Over IP session ("VOIP"), a PSTN session, a streaming media session and/or any other method know today or to be devised in the future of audio communication.

According to some embodiments of the present invention, communication module 3400 may be adapted to send and/or receive analog audio signals, digital audio signals, packetized data stream, streaming audio data according to the type of audio communication session the module is facilitating.

According to some embodiments of the present invention, recording module 3300 may record both inbound and outbound audio streams (4100).

According to some embodiments of the present invention, recording module 3300 may be adapted to record and save the one or more audio streams participating in the audio communication session.

According to some embodiments of the present invention, recording module 3300 may also associate a meta-data ("header") portion with each participant's data stream. According to some further embodiments of the present invention, the header may comprise of details of the recorded audio stream (i.e. name, phone number. IP address, start time, end time).

According to some embodiments of the present invention, recording module 3300 may be adapted to create an audio file of the audio communication session consisting of the participants recorded data streams.

According to some embodiments of the present invention, the recording module 3300 may associate a meta-data portion with the audio file of the audio communication session. According to some further embodiments of the present invention, the meta-data may be generated using the meta-data of each recorded audio stream and may comprise details of the audio communication session, such details may be: start time, end time to field, from field, date. length of conversation and a conversion to text field which is discussed herein below.

According to some embodiments of the present invention, an audio and text storage module 3900 may be adapted to log and store the audio communication session and associate it with the recorded data streams (4200).

According to some embodiments of the present invention, a storage module 3900 may be adapted to store the audio files generated by the recording module and to access the audio files using parameters extracted from the files header.

According to some embodiments of the present invention, storage module 3900 may manage look-up tables with identical fields to those of the files meta-data portion. According to yet further embodiments of the present invention, storage module 3900 may access the stored files using the look-up tables described hereinabove.

According to some embodiments of the present invention, a speech to text conversion module 3700 may generate a text file from an audio file (audio stream) (steps 4300 and 4400).

According to some further embodiments of the present invention, the text file generated by the speech to text module may comprise a transcript of the recorded audio conversation.

According to some embodiments of the present invention, the speech to text conversion module 3700 may generate a header portion to the text file. According to some embodiments of the present invention, the header may comprise the same details as the one header of the audio file it was created from and an identifier of the audio file it was generated from.

According to some embodiments of the present invention, storage module 3900 may be adapted to store the text files generated by the speech to text conversion module (step 4500). According to some embodiments of the present invention storage module 3900 may access the text files using parameters extracted from the files header.

According to some embodiments of the present invention, storage module 3900 may manage look-up tables with identical fields to those of the files meta-data portion. According to yet further embodiments of the present invention, storage module 3900 may access the stored files using the look-up tables described hereinabove.

According to yet further embodiments of the present invention, storage module 3900 may associate a text file with the audio file it was generated from using a lookup table.

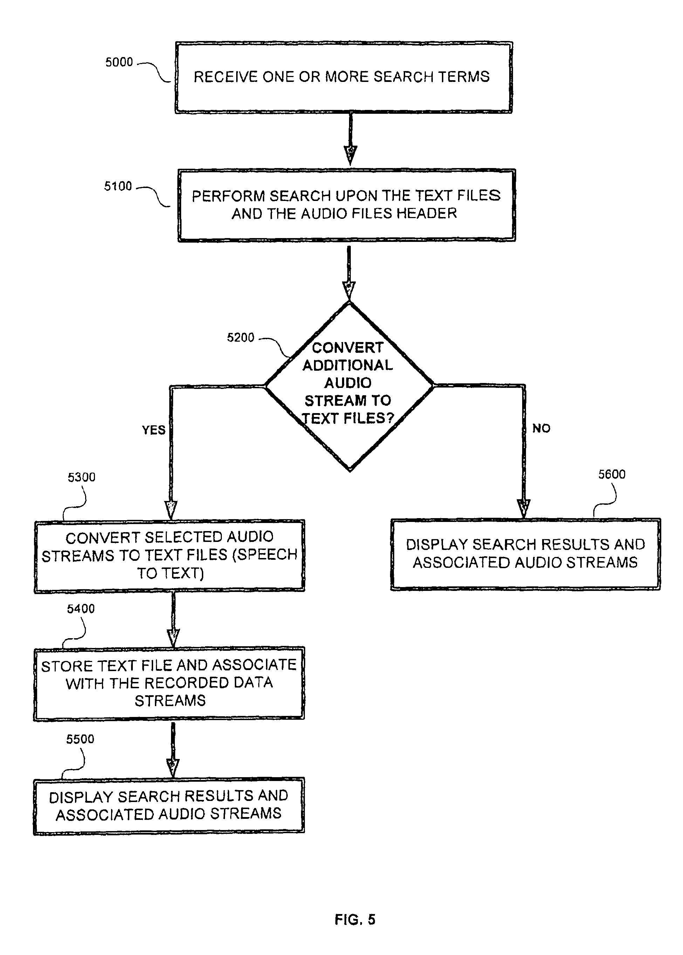

Turning now to Fig. 5. there is depicted a flow chart showing the steps of an exemplary embodiment in accordance with the present invention.

According to some embodiments of the present invention, a text search module 3800 may be adapted to receive one or more search terms (step 5000).

According to some embodiments of the present invention, text search module 3800 may perform a search for the search terms among the text files and the audio files meta-data (step 5100).

According to some embodiments of the present invention, text search module 3800 may identify audio files (1) with a meta-data portion that comprises one or more search terms and (2) were not converted to text.

According to yet further embodiments of the present invention the user may select audio files from the above mentioned group and convert them to text as described hereinabove in conjunction with the functionality of the speech to text module 3700 (steps 5200, 5300 and 5400).

According to some embodiments of the present invention, output interface module may show via an output device (i.e. integral display, external display) the search results as described in details in Fig. 2 (steps 5500 and 5600).

According to some embodiments of the present invention, audio playback module 3500 may play an audio file stored at storage module 3900 upon file selection.

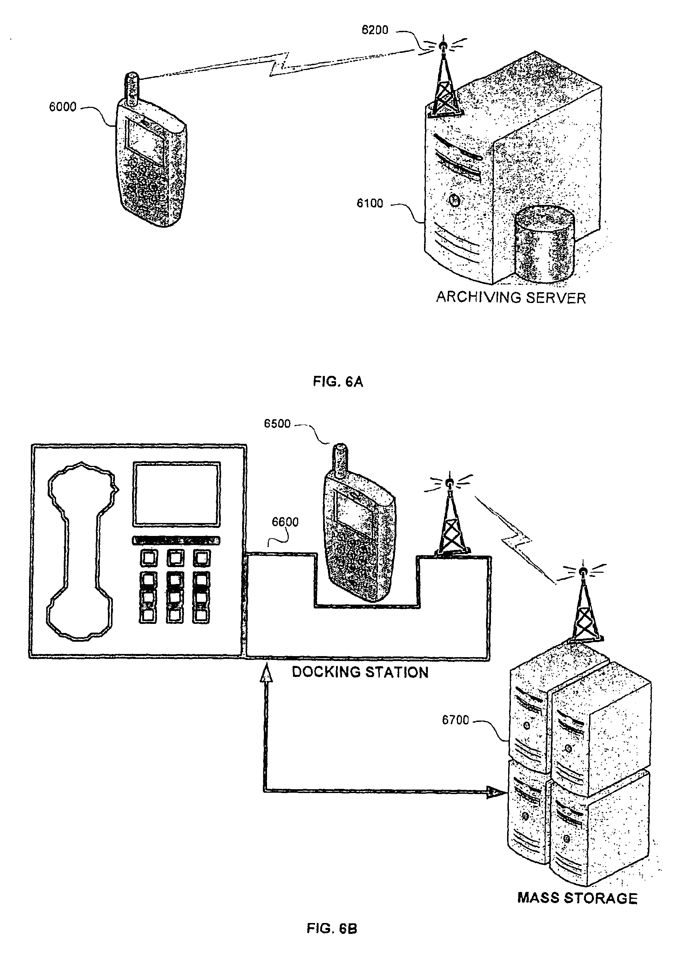

Turning now to Fig.6A. there is shown an exemplary embodiment of the present invention. According to some embodiment of the present invention, a communication device 6000, which communication device may be associated with unit 3000, may exchange data (storage data) with an archiving server 6100.

According to some further embodiment of the present invention, archive module 3600 may perform the exchanging of storage data described hereinabove. According to yet further embodiment of the present invention, the archive module may import and/or export communication data from an external archiving server.

Turning now to Fig. 6B, there is shown yet another exemplary embodiment of the present invention. According to some embodiment of the present invention, a communication device 6500. which communication device may be associated with unit 3000, may be connected to a docking station 6700 ("docking").

According to some embodiment of the present invention, the communication device 6500 may, while it's docking, feed of an external power supplied to the docking station.

According to yet further embodiment of the present invention, the communication device 6500 may import and/or export communication data from the docking station external mass storage server 6700.

According to some further embodiment of the present invention, archive module 3600 may import and/or export communication data from the docking station mass storage system.

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A communication device comprising:
a session recording module adapted to store on a non-volatile memory, data derived from a media stream associated with a communication session, and to update a log with characterization data o the communication session, wherein said characterization data includes a pointer to the stored data:
a speech to text module adapted to convert speech content within the communication session into text data; and
a display module adapted to display at least a portion of the characterization data.

2. The communication device according to claim 1, wherein said display module is further adapted to display a link to the stored data.

3. The communication device according to claim 1, further comprising a search module adapted to search for search terms within the text data.

4. The communication device according to claim 3, wherein said search module is further adapted to search meta-data associated with stored log data.

5. A method of operating a communication device comprising:
storing on a non-volatile memory data derived from a media stream associated with a communication session:
updating a log with characterization data of the session, wherein said characterization data includes a pointer to the stored data:
displaying at least a portion of the characterization data: and
converting speech content within the communication session into tex data.

6. The method according to claim 5 further comprising a step of storing the text data.

7. The method according to claim 5. further comprising searching for tex terms within the text data.

8. The method according to claim 5. further comprising searching for meta data associated with stored log data.

9. A communication system comprising:
a transceiver:
a session recording module adapted to store on a non-volatile memory data derived from a media streams associated with a communication session and to update a log with characterization data of the session wherein said characterization data includes a pointer to the stored data and
a display module adapted to display at least a portion of the characterization data.

10. The system according to claim 9. wherein said display module is further adapted to display a link to the stored data.

11. The system according to claim 9, further comprising a speech to text module adapted to convert speech content within the communication session into text data.

12. The system according to claim 11, further comprising a storage module fo storing the text data.

13. The system according to claim 11, further comprising a search module adapted to search for search terms within the text data.

14. The system according to claim 13, wherein said search module is further adapted to search meta-data associated with stored log data.

15. The system according to claim 9, further comprising an archiving serve adapted to receive stored data through said transceiver.
